# EUROPEAN PATENT SPECIFICATION

(11) **EP 4 224 609 B1**
(45) Date of publication and mention of the grant of the patent: **30.09.2026**
(21) Application number: 22788511.8
(22) Date of filing: 15.04.2022
(51) Int. Cl.: H01M 10/653, H01M 50/342, H01M 50/375, H01M 50/193, H01M 50/129, H01M 50/105, H01M 10/647, H01M 50/126, H01M 50/197, H01M 50/198, H01M 50/178, H01M 50/186, H01M 50/55, H01M 50/557

(54) **SECONDARY BATTERY**
SEKUNDÄRBATTERIE
BATTERIE SECONDAIRE

(30) Priority: 15.04.2021 KR 20210049399
(43) Date of publication of application: 09.08.2023
(73) Proprietor: LG Energy Solution, Ltd., Seoul 07335 (KR)
(72) Inventor: LIM, Hun-Hee, Daejeon 34122 (KR); KIM, Sang-Hun, Daejeon 34122 (KR); KANG, Min-Hyeong, Daejeon 34122 (KR); SONG, Dae-Woong, Daejeon 34122 (KR); YU, Hyung-Kyun, Daejeon 34122 (KR); HWANG, Soo-Ji, Daejeon 34122 (KR)
(74) Representative: Plasseraud IP
(86) International application number: PCT/KR2022/005503
(87) International publication number: WO 2022/220656

(56) References cited:
- JP-A- 2019 521 520
- KR-A- 20030 066 895
- KR-A- 20140 035 462
- KR-A- 20170 007 876
- KR-A- 20190 047 104
- KR-A- 20210 012 457
- KR-B1- 101 416 851
- US-A1- 2020 358 154

## Description

### TECHNICAL FIELD

The present application claims priority to Korean Patent Application No. 10-2021-0049399 filed on April 15, 2021.

The present disclosure relates to a secondary battery, and more particularly, to a secondary battery having a vent member.

### BACKGROUND ART

Secondary batteries are highly applicable to various products and exhibit superior electrical properties such as high energy density, etc. Secondary batteries are commonly used not only in portable devices but also in electric vehicles (EVs) or hybrid electric vehicles (HEVs) driven by electrical power sources. The secondary battery is drawing attention as a new energy source for enhancing environment friendliness and energy efficiency in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like.

The secondary battery generally has a structure in which an electrode assembly including at least one unit cell having a positive electrode/separator/negative electrode structure is accommodated in a case of a laminate sheet in which an outer layer, a metal barrier layer and a sealant layer are sequentially laminated, and a sealant resin of the sealant layer is fused to seal the electrode assembly.

In the conventional secondary battery, the battery may ignite due to various causes such as a short circuit inside the secondary battery, overcharge or overdischarge, temperature control, or the like. At this time, thermal propagation where the temperature inside the secondary battery rises rapidly and simultaneously the heat is transferred to neighboring cells may be generated, which may further increase the fire.

In order to minimize damage to the electrode caused by gas when thermal propagation occurs - *i.e.,* when the internal temperature of the secondary battery rises, directional venting characteristic is required to discharge the gas in one direction. However, the conventional secondary battery has a problem in that it is difficult to induce gas discharge in a specific direction.

Therefore, the present disclosure is directed to providing a secondary battery with improved safety by inducing gas discharge in a specific direction.

KR 10 1416851 B1 discloses a secondary battery. KR 2021 0012457 A discloses a rechargeable battery manufacturing method and a rechargeable battery manufactured from thereof.

### DISCLOSURE

### Technical Problem

The present disclosure is directed to providing a secondary battery with improved safety by inducing gas discharge in a specific direction.

### Technical Solution

In one aspect of the present disclosure, there are provided secondary batteries according to the following embodiments.

According to the invention it is provided a secondary battery, comprising:
an electrode assembly;
an electrode lead attached to the electrode assembly;
a case configured to accommodate the electrode assembly therein;
a lead film formed to surround a part of an outer surface of the electrode lead and interposed between the electrode lead and the case; and
a vent member,
wherein the case contains a sealant layer, and a thermal conductive layer is included in the sealant layer, wherein
the thermal conductive layer includes thermally conductive particles,
the case includes a sealing portion formed to seal the electrode assembly, and the vent member is located in the sealing portion, and
the sealing portion contains a sealant resin, and the vent member has a lower melting point than the sealant resin.

In a further embodiment according to the invention, the thermal conductive layer may be located in a core of the sealant layer.

In a further embodiment according to the invention, the thermally conductive particles may include boron nitride, aluminum nitride, or a mixture thereof.

In a further embodiment according to the invention, the thermal conductive layer may be in a film shape.

In a further embodiment according to the invention, the thermal conductive layer may be in a film shape including thermally conductive particles and a binder.

In a further embodiment according to the invention, the vent member may be located in the sealing portion at a corner where the electrode lead is exposed to the outside.

In a further embodiment according to the invention, the vent member may be vented at 100°C to 120°C.

In a further embodiment according to the invention, the vent member may be vented at a pressure of 1.5 atm or above.

In a further embodiment according to the invention, the vent member may have a maximum sealing strength of less than 6 kgf/15 mm at 100°C or above (wherein 1 kgf = 9.80665 N).

In a further embodiment according to the invention, the vent member may have an average sealing strength of less than 4.5 kgf/15 mm at 100°C or above (wherein 1 kgf = 9.80665 N).

In a further embodiment according to the invention, the vent member may have a maximum sealing strength of 6 kgf/15 mm (wherein 1 kgf = 9.80665 N) or more at room temperature to 60°C.

In a further embodiment according to the invention, the vent member may have an average sealing strength of 4.5 kgf/15 mm wherein 1 kgf = 9.80665 N or more at room temperature to 60°C.

In a further embodiment according to the invention, the vent member may contain a linear low-density polyethylene having a comonomer with a carbon number of 6 or more.

In a further embodiment according to the invention, the linear low-density polyethylene having a comonomer with a carbon number of 6 or more may be polymerized in the presence of a metallocene catalyst.

In a further embodiment according to the invention, in the linear low-density polyethylene having a comonomer with a carbon number of 6 or more, a content of the comonomer with a carbon number of 6 or more may be 15 weight% or less, based on 100 weight% of the linear low-density polyethylene having a comonomer with a carbon number of 6 or more.

In a further embodiment according to the invention, the linear low-density polyethylene having a comonomer with a carbon number of 6 or more may have a poly dispersity index (PDI) of 4 or less.

In a further embodiment according to the invention, the case may include a sealing portion formed to seal the electrode assembly, the sealing portion may contain a sealant resin, and a difference between a crystallization temperature of the sealant resin and a crystallization temperature of the linear low-density polyethylene having a comonomer with a carbon number of 6 or more may be 10°C or less.

In a further embodiment according to the invention, the linear low-density polyethylene having a comonomer with a carbon number of 6 or more may have a crystallization temperature of 90°C to 115°C.

In a further embodiment according to the invention, the vent member may have a melting point of 100°C to 130°C.

In a further embodiment according to the invention, the linear low-density polyethylene having a comonomer with a carbon number of 6 or more may have a weight-average molecular weight of 100,000 g/mol to 400,000 g/mol.

In a further embodiment, the secondary battery may be a pouch-type secondary battery.

### Advantageous Effects

The secondary battery according to an embodiment of the present disclosure may include a thermal conductive layer in the sealant layer of the case to induce a gas to be discharged toward the vent member. Accordingly, the safety of the battery may be improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view of a secondary battery according to an embodiment of the present disclosure.
FIG. 2 is a cross-sectional view, taken along the line A-A' of FIG. 1.
FIG. 3 is a cross-sectional view, taken along the line B-B' of FIG. 1, showing a state in which a vent occurs in the secondary battery according to an embodiment of the present disclosure.

### DETAILED DESCRIPTION

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

A secondary battery according to an embodiment of the present disclosure includes an electrode assembly; an electrode lead attached to the electrode assembly; a case configured to accommodate the electrode assembly therein; a lead film formed to surround a part of an outer surface of the electrode lead and interposed between the electrode lead and the case; and a vent member, wherein the case contains a sealant layer, and a thermal conductive layer is included in the sealant layer.

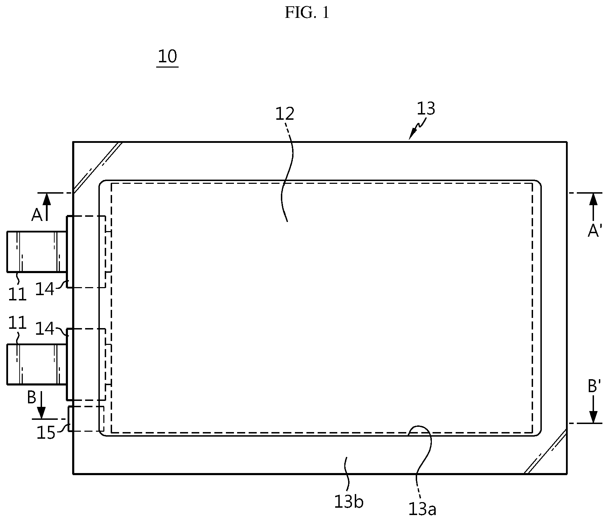

FIG. 1 shows a secondary battery 10 according to an embodiment of the present disclosure.

Referring to FIG. 1, the secondary battery 10 includes an electrode assembly 12 to which an electrode lead 11 is attached, and a case 13.

The electrode assembly 12 includes a positive electrode plate, a negative electrode plate and a separator. In the electrode assembly 12, a positive electrode plate and a negative electrode plate may be sequentially laminated with a separator being interposed therebetween.

The positive electrode plate may include a positive electrode current collector made of a metal thin film having excellent conductivity - for example, an aluminum (Al) foil, and a positive electrode active material layer coated on at least one surface thereof. In addition, the positive electrode plate may include a positive electrode tab made of a metal material - for example, an aluminum (Al) material, at one side end thereof. The positive electrode tab may protrude from one side end of the positive electrode plate. The positive electrode tab may be welded to one side end of the positive electrode plate, or be bonded thereto using a conductive adhesive.

The negative electrode plate may include a negative electrode current collector made of a conductive metal thin film - for example, a copper (Cu) foil, and a negative electrode active material layer coated on at least one surface thereof. In addition, the negative electrode plate may include a negative electrode tab formed of a metal material - for example, a nickel (Ni) material, at one side end thereof. The negative electrode tab may protrude from one side end of the negative electrode plate. The negative electrode tab may be welded to one side end of the negative electrode plate, or be bonded thereto using a conductive adhesive.

The separator is interposed between the positive electrode plate and the negative electrode plate to electrically insulate the positive electrode plate and the negative electrode plate from each other. The separator may be a porous membrane so that lithium ions can pass between the positive electrode plate and the negative electrode plate. The separator may include, for example, a porous membrane using polyethylene (PE), or polypropylene (PP), or a composite film thereof.

An inorganic coating layer may be provided on the surface of the separator. The inorganic coating layer may have a structure in which inorganic particles are bonded to each other by a binder to form an interstitial volume between the particles.

The electrode assembly 12 may be a jelly-roll (winding-type) electrode assembly having a structure in which long sheet-type positive and negative electrodes are wound with a separator being interposed therebetween, a stacked (stack-type) electrode assembly having a structure in which a plurality of positive and negative electrodes cut into units of a predetermined size are sequentially stacked with a separator being interposed therebetween, a stack/folding type electrode assembly having a structure in which bi-cells or full-cells where positive and negative electrodes of a predetermined unit are stacked with a separator being interposed therebetween are wound, or the like.

The case 13 serves to accommodate the electrode assembly 12.

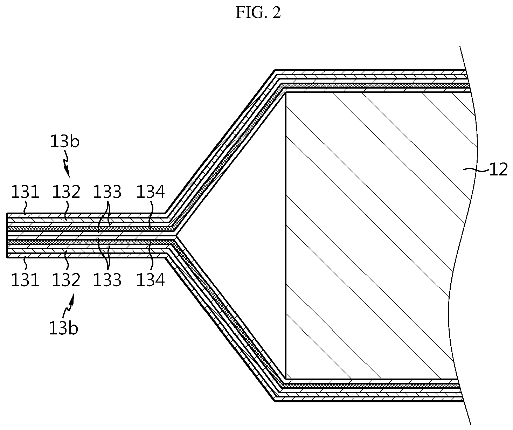

FIG. 2 is a cross-sectional view, taken along the line A-A' of FIG. 1.

Referring to FIG. 2, the case 13 includes a sealant layer, and a thermal conductive layer is included in the sealant layer. For example, the case 13 may be provided in a multilayer structure including an outer layer 131 for protection against external impacts, a sealant layer 133 for sealing the case, a metal barrier layer 134, and a sealant layer 133.

The outer layer 131 may include a polyester-based film using polyethylene terephthalate (PET), polybutylene terephthalate, polyethylene naphthalate, polybutylene naphthalate, co-polyester, polycarbonate, nylon, or the like, and may be configured in a single layer or multiple layers.

The metal barrier layer 132 may include aluminum, copper, or the like.

The sealant layer 133 includes a sealant resin and may be formed in multiple layers. When the sealant layer 133 is formed in multiple layers, the thermal conductive layer 134 may be positioned between the plurality of sealant layers 133. For example, the thermal conductive layer 134 may be positioned at a core of the sealant layer 133.

The sealant resin may include polypropylene (PP), acid-modified polypropylene (PPa), random polypropylene, ethylene propylene copolymer, or two or more thereof. The ethylene propylene copolymer may include, but is not limited to, ethylene-propylene rubber, ethylene-propylene block copolymer, and the like.

The thermal conductive layer 134 may effectively prevent local thermal damage to the case by dispersing local heat generated by the abnormal reaction of the battery to the entire case. In addition, since the thermal conductive layer 134 may transfer the generated local heat toward the vent member, the gas may be more easily discharged from the vent member.

If the temperature inside the secondary battery rapidly rises due to abnormal operation of the battery, the case may be damaged before venting occurs in the vent member. If the thermal conductive layer 134 is provided as in the secondary battery according to an embodiment of the present disclosure, it is possible to prevent the heat from being transferred to the case 13, for example to the metal barrier layer 132 of the case 13, thereby preventing that case 13 is damaged before venting occurs.

In an embodiment of the present disclosure, the thermal conductive layer 134 may not be in direct contact with the vent member 15, explained later. Even if the thermal conductive layer 134 does not come in direct contact with the vent member 15, the thermal conductive layer 134 may transfer the generated local heat to the vent member, so that the gas may be more easily discharged from the vent member.

In an embodiment of the present disclosure, the thermal conductive layer 134 may be inserted into the sealant layer 133 through an extrusion lamination method.

The thermal conductive layer 134 includes thermally conductive particles. The thermally conductive particles may include, for example, boron nitride, aluminum nitride, or a mixture thereof.

In an embodiment of the present disclosure, the thermal conductive layer 134 may be in a film shape. For example, the thermal conductive layer 134 may be in a film shape including the thermally conductive particles and a binder. The binder may be a nonconductive material. For example, the binder may include polypropylene or the like.

When the thermal conductive layer 134 includes the thermally conductive particles and the binder, the content of the thermally conductive particles may be 10 to 80 weight%, based on 100 weight% of the thermal conductive layer 134. When the content of the thermally conductive particles satisfies the above-mentioned range, it may be easier to effectively prevent local thermal damage to the case.

When the thermal conductive layer 134 is in a film shape, a mixture of the thermally conductive particles and the binder may be extruded into a film shape.

When the thermal conductive layer 134 is in a film shape, the thickness of the thermal conductive layer 134 may be 20 µm to 40 µm.

The case 13 includes an accommodation portion 13a for accommodating the electrode assembly 12, and a sealing portion 13b formed to seal the electrode assembly 12.

The sealing portion 13b may be fused along the outer circumference of the accommodation portion 13a to seal the electrode assembly 12. The sealant layer of the case 13 may be fused to form the sealing portion 13b. The sealing portion 13b may be fused by thermal fusion or ultrasonic fusion, but the present disclosure is not particularly limited thereto as long as the sealing portion 13b can be fused.

In an embodiment of the present disclosure, the case 13 may be in a pouch form.

The pouch-type case 13 may include an upper pouch and a lower pouch. When the case 13 includes an upper pouch and a lower pouch, after the upper pouch and the lower pouch are positioned so that the sealant resins thereof face each other, the facing sealant resins may be configured to be fused with each other by heat and pressure to seal the battery.

The sealing portion 13b may be sealed on four or three peripheral sides of the battery case 13 in some embodiments. In the three-sided sealing structure, after the upper pouch and the lower pouch are formed on one pouch sheet, the boundary surface between the upper pouch and the lower pouch is bent so that the electrode assembly accommodation portions 13a formed on the upper pouch and the lower pouch overlap, and in this state, the edges of the remaining three sides are sealed except for the bending portion.

The electrode lead 11 may be accommodated in the case 13 so that a part thereof is exposed to the outside of the battery case 13 as shown in FIG. 1.

Referring to FIG. 1, the secondary battery 10 according to an embodiment of the present disclosure includes a lead film 14.

The lead film 14 surrounds a part of the outer surface of the electrode lead 11 and is interposed between the electrode lead 11 and the case 13. For example, the lead film 14 may be interposed between the electrode lead 11 and the sealing portion 13b of the case 13 in a region where the electrode lead 11 protrudes or extends away from the case 13 to help binding of the electrode lead 11 and the case 13.

Referring to FIG. 1, the secondary battery 10 according to an embodiment of the present disclosure includes a vent member 15. When thermal propagation occurs, the vent member 15 may induce gases to be discharged in a specific direction, thereby improving the safety of the battery.

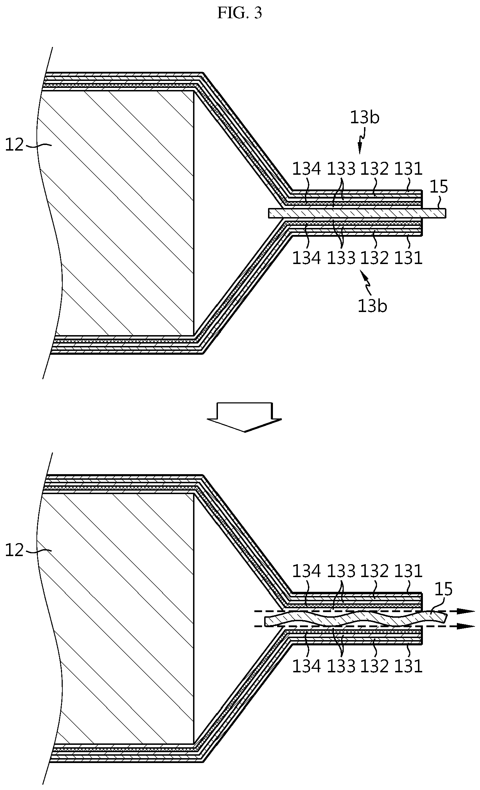

FIG. 3 is a cross-sectional view, taken along the line B-B' of FIG. 1, showing a state in which a vent occurs in the secondary battery according to an embodiment of the present disclosure. Specifically, FIG. 3 is a cross-sectional view showing the vent member in the secondary battery according to an embodiment of the present invention.

Referring to FIG. 3, at a temperature at which the battery normally operates, the vent member 15 serves to seal the case from the outside. If the temperature of the battery rises excessively due to abnormal operation of the battery, the vent member 15 melts and the sealing strength of the part of the case in which the vent member 15 is inserted decreases. Therefore, gas may be discharged into this part. For example, as the pressure of the gas inside the battery is applied to the interface between the vent member 15 and the case, a gap is formed between the vent member 15 and the case, and the gas may be discharged thereto.

Referring to FIG. 3, the vent member 15 may be located between the sealant layer 133 on the case and the sealant layer 133 below the case. As the vent member 15 is fused, the vent member 15 may be positioned between the sealant layer 133 on the case and the sealant layer 133 below the case.

The vent member 15 can be attached to the case 13 by thermal fusion. In another example, the vent member 15 can be attached to the case 13 by an adhesive such as glue. In another example, the vent member 15 and the case 13 may be physically coupled to each other by means of a clip or the like. In another example, at least a part of the vent member 15 may be embedded in a film constituting the case 13, for example a sealant resin.

The vent member 15 has a lower melting point than the sealant resin. Because the vent member 15 has a lower melting point than the sealant resin, the vent member 15 may melt faster than the sealant resin at a high temperatures. As the sealing strength of the part in which the vent member 15 is inserted is lower than the sealing strength of the case containing a sealant resin, the vent characteristics may be more easily implemented.

In an embodiment of the present disclosure, the vent member 15 may have a melting point of 100°C to 130°C, or 105°C to 125°C, or 110°C to 120°C. If the vent member 15 satisfies the above-mentioned range, the sealing strength of the part of the case 13 in which the vent member 15 is inserted may be lowered at a high temperature, for example 100°C or higher, so that the venting characteristic may be readily implemented.

The melting point of the vent member 15 may be measured using a differential scanning calorimeter (DSC). For example, the temperature of a sample is increased from 30°C to 280°C at 10°C/min, maintained at 280°C for 10 minutes, cooled to 30°C at 10°C/min, and then maintained at 30°C for 10 minutes. Then, after increasing the temperature of the sample from 30°C to 280°C at 10°C/min, the melting point may be measured by maintaining the temperature at 280°C for 10 minutes.

Referring to FIGS. 1 and 3, the vent member 15 is located in the sealing portion 13b.

Referring to FIG. 1, the vent member 15 may be located in the sealing portion at a corner of the case. For example, the vent member 15 may be located at a corner of the sealing portion where the electrode lead 11 is exposed to the outside. Specifically, the vent member 15 may be located in the sealing portion next to the electrode lead 11, except for a region between the electrode leads 11. When the vent member 15 is located at the corner of the sealing portion where the electrode lead 11 is exposed to the outside, the amount of gas discharged toward the electrode lead 11 may be minimized, so that the safety of the battery may be further improved.

In an embodiment of the present disclosure, when the sealing portion 13b is sealed at three sides, the bent side of the case and one end of the vent member 15 may be in close contact.

In another embodiment of the present disclosure, the vent member 15 may be located in the sealing portion, except for the sealing portion where the electrode lead 11 is exposed to the outside.

In another embodiment of the present disclosure, the vent member 15 may be located in the sealing portion where the electrode lead 11 is exposed to the outside. For example, the vent member 15 may be positioned in the sealing portion between the electrode lead 11 and the electrode lead 11.

In an embodiment of the present disclosure, the vent member 15 may further include an adhesive layer for smoother placement.

In an embodiment of the present disclosure, the vent member 15 may be vented at 100°C to 120°C to expel or exhaust gases from the accommodation portion to outside the secondary battery. In particular, the vent member 15 may be vented at a temperature of 100°C to 120°C and at a pressure of 1.5 atm or more. As the vent member 15 is vented in the aforementioned temperature range and/or the aforementioned pressure condition, it is possible to induce the gas to be discharged only during abnormal operation of the battery while sealing the battery during normal operation of the battery.

In an embodiment of the present disclosure, the vent member 15 may have a maximum sealing strength of less than 6 kgf/15 mm or less than 5 kgf/15mm or less than 4.5 kgf/15mm at 100°C or higher. In an embodiment of the present disclosure, the vent member 15 may have a maximum sealing strength of less than 6 kgf/15 mm or less than 5 kgf/15mm or less than 4.5 kgf/15mm at 100°C to 120°C. In an embodiment of the present disclosure, the vent member 15 may have a maximum sealing strength of less than 3 kgf/15 mm or less than 2 kgf/15 mm or less than 1 kgf/15 mm or less than 0.5 kgf/15 mm at 120°C or higher. If the vent member 15 satisfies the above-mentioned sealing strength in the above-mentioned temperature range, the sealing strength of the part of the case 13 in which the vent member 15 is inserted may be lowered at a high temperature, for example 100°C or higher, so that the vent characteristic may be readily implemented.

In an embodiment of the present disclosure, the vent member 15 may have a maximum sealing strength of 6 kgf/15 mm or more or 8 kgf/15 mm or more or 10 kgf/15 mm or more at room temperature to 60°C. If the vent member 15 satisfies the above-mentioned sealing strength in the above temperature range, even though the vent member 15 is inserted, the part of the case 13 in which the vent member 15 is inserted may have excellent sealing strength during normal operation of the battery, which may easily secure the sealing property of the battery.

In an embodiment of the present disclosure, the vent member 15 may have a maximum sealing strength of less than 6 kgf/15 mm at 100°C or higher. The vent member 15 may have a maximum sealing strength of 6 kgf/15 mm or more at room temperature to 60°C. If the vent member 15 satisfies the sealing strength described above, the sealing strength of the part of the case 13 in which the vent member 15 is inserted may be lowered at a high temperature, for example at 100°C or higher, so that the vent characteristic may be readily implemented. In addition, since the case 13 has excellent sealing strength during normal operation of the battery, the sealing property of the battery may be easily secured.

In an embodiment of the present disclosure, the vent member 15 may have an average sealing strength of less than 4.5 kgf/15 mm or less than 3 kgf/15 mm at 100°C or above. In an embodiment of the present disclosure, the vent member 15 may have an average sealing strength of less than 4.5 kgf/15 mm or less than 3 kgf/15 mm at 100°C to 120°C. In an embodiment of the present disclosure, the vent member 15 may have an average sealing strength of less than 2 kgf/15 mm or less than 1 kgf/15 mm or less than 0.5 kgf/15 mm at 120°C or higher. If the vent member 15 satisfies the above-mentioned sealing strength in the above-mentioned temperature range, the sealing strength of the part of the case 13 in which the vent member 15 is inserted may be lowered at a high temperature, for example at 100°C or higher, so that the vent characteristic may be implemented more easily.

In an embodiment of the present disclosure, the vent member 15 may have an average sealing strength of 4.5 kgf/15 mm or more or 5 kgf/15 mm or more or 6 kgf/15mm or more or 7 kgf/15 mm or more at room temperature to 60°C. If the vent member 15 satisfies the above-mentioned sealing strength in the above temperature range, even though the vent member 15 is inserted, the part of the case 13 in which the vent member 15 is inserted may have excellent sealing strength during normal operation of the battery, which may easily secure the sealing property of the battery.

In an embodiment of the present disclosure, the vent member 15 may have an average sealing strength of less than 4.5 kgf/15 mm at 100°C or above. The vent member 15 may have an average sealing strength of 4.5 kgf/15 mm or more at room temperature to 60°C. If the vent member 15 has the above-mentioned sealing strength in the above-described temperature range, the sealing strength of the part of the case 13 in which the vent member 15 is inserted may be lowered at a high temperature, for example at 100°C or higher, so that the vent characteristic may be easily implemented. In addition, since the case 13 has excellent sealing strength during normal operation of the battery, the sealing property of the battery may be easily secured.

The sealing strength of the vent member 15 according to temperature may be measured by conducting a tensile test at a speed of 5 mm/min, after cutting the case 13 corresponding to the part in which the vent member 15 is inserted into a width of 15 mm and a length of 5 cm and then gripping both ends thereof using a UTM jig in a state where both ends are spread to 180°.

At this time, the maximum sealing strength means a maximum value when the case 13 is broken, and the average sealing strength means an average value when the case 13 is stretched by 8 mm at 4.5 kgf/15 mm when the maximum sealing strength is 4.5 kgf/15 mm or more and an average value when the case 13 is stretched by 8 mm at the maximum sealing strength when the maximum sealing strength is less than 4.5 kgf/15 mm.

**In** an embodiment of the present disclosure, the vent member 15 may include a linear low-density polyethylene having a comonomer with a carbon number of 6 or more. As the vent member 15 includes a linear low-density polyethylene having a comonomer with a carbon number of 6 or more, the sealing property of the case 13 is excellent in the normal temperature range, for example from room temperature to 60°C, and at a high temperature, for example 100°C or above, the sealing strength of the case in which the vent member 15 is inserted is lowered, which may realize or cause venting.

**In** an embodiment of the present disclosure, the vent member 15 may include a linear low-density polyethylene having a comonomer with a carbon number of 6 to 8.

In an embodiment of the present disclosure, the linear low-density polyethylene having a comonomer with a carbon number of 6 or more may be polymerized in the presence of a metallocene catalyst. If the linear low-density polyethylene having a comonomer with a carbon number of 6 or more is polymerized in the presence of a metallocene catalyst, it may be more advantageous in terms of sealing strength and properties, compared to the case where it is polymerized in the presence of a Ziegler-Natta catalyst.

In an embodiment of the present disclosure, the content of the comonomer with a carbon number of 6 or more in the linear low-density polyethylene having a comonomer with a carbon number of 6 or more may be 15 weight% or less, or 12 weight% or less, or 11.8 weight% or less, or 10 weight% or less, or 9 weight% or less, or 8 weight% or less, or 7.6 weight% or less, based on 100 weight% of the linear low-density polyethylene having a comonomer with a carbon number of 6 or more. At the same time, it may be 5 weight% or more, or 7.6 weight% or more, or 8 weight % or more, or 9.0 weight% or more, or 10 weight% or more, or 11.8 weight% or more, or 12 weight% or more. If the content of the comonomer with a carbon number of 6 or more satisfies the above-mentioned range, it may be easy to ensure that the sealing strength is not lowered during normal operation of the battery due to a decreased packing density between molecules.

The content of the comonomer with a carbon number of 6 or more may be measured using an H-NMR. For example, after about 10 mg of a sample is completely dissolved in about 0.6 mL of trichloroethylene solvent using a heat gun, it may be sampled in an NMR tube and measured using the ¹H-NMR.

In an embodiment of the present disclosure, the linear low-density polyethylene having a comonomer with a carbon number of 6 or more may have a weight-average molecular weight of 100,000 g/mol to 400,000 g/mol, or 200,000 g/mol to 350,000 g/mol, or 230,000 g/mol to 300,000 g/mol. If the weight-average molecular weight of the linear low-density polyethylene having a comonomer with a carbon number of 6 or more satisfies the above-described range, the sealing strength with the sealant resin may be more excellent during normal operation of the battery.

In an embodiment of the present disclosure, the linear low-density polyethylene having a comonomer with a carbon number of 6 or more may have a poly dispersity index (PDI) of 4 or less, or 3.8 or less, or 3.796 or less, or 3.5 or less, or 3.023 or less, or 3 or less, or 2.7 or less, or 2.674 or less. In addition, the poly dispersity index (PDI) may be 1.0 or more. If the poly dispersity index of the linear low-density polyethylene having a comonomer with a carbon number of 6 or more satisfies the above range, the molecular weight distribution is narrow, so the sealing strength and the properties may be more excellent during normal operation of the battery.

The weight-average molecular weight and the poly dispersity index of the linear low-density polyethylene having a comonomer with a carbon number of 6 or more may be measured by gel permeation chromatography (GPC) under the following conditions:
- column: Tosoh, HLC-8321 GPC/HT
- solvent: TCB (Trichlorobenzene) + 0.04% BHT (after drying with 0.1% CaCl₂)
- flow velocity: 1.0 ml/min
- sample concentration: 1.5 mg/ml
- dose: 300 µl
- column temperature: 160°C
- Detector: RI detector
- Standard: Polystyrene (calibrated with a third-order function)

In an embodiment of the present disclosure, the crystallization temperature of the sealant resin and the crystallization temperature of the linear low-density polyethylene having a comonomer with a carbon number of 6 or more may be similar. For example, the difference between the crystallization temperature of the sealant resin and the crystallization temperature of the linear low-density polyethylene having a comonomer with a carbon number of 6 or more may be 10°C or less, or 5°C or less. In addition, the difference between the crystallization temperature of the sealant resin and the crystallization temperature of the linear low-density polyethylene having a comonomer with a carbon number of 6 or more may be 0.1°C or more. If the difference between the crystallization temperature of the sealant resin and the crystallization temperature of the linear low-density polyethylene having a comonomer with a carbon number of 6 or more satisfies the above range, the sealant resin and the linear low-density polyethylene having a comonomer with a carbon number of 6 or more may have improved fusion characteristic during normal operation of the battery.

In an embodiment of the present disclosure, the linear low-density polyethylene having a comonomer with a carbon number of 6 or more may have a crystallization temperature of 90°C to 115°C, or 95°C to 110°C, or 100°C to 110°C, or 105°C to 110°C. If the crystallization temperature of the linear low-density polyethylene having a comonomer with a carbon number of 6 or more satisfies the above range, the sealant resin and the linear low-density polyethylene having a comonomer with a carbon number of 6 or more may have improved fusion characteristics.

In an embodiment of the present disclosure, the difference between the crystallization temperature of the sealant resin and the crystallization temperature of the linear low-density polyethylene having a comonomer with a carbon number of 6 or more may be 10°C or less, and the crystallization temperature of the linear low-density polyethylene having a comonomer with a carbon number of 6 or more may be 90°C to 115°C.

The crystallization temperature may be measured using a differential scanning calorimeter (DSC). For example, the temperature of the sample may be increased from 30°C to 280°C at 10°C/min, maintained at 280°C for 10 minutes, cooled to 30°C at 10°C/min, and then maintained at 30°C for 10 minutes. Then, after increasing the temperature of the sample from 30°C to 280°C at 10°C/min, the crystallization temperature may be measured by maintaining the temperature at 280°C for 10 minutes.

In an embodiment of the present disclosure, the vent member 15 may have various shapes so that the gas is easily directed toward the vent region. For example, the vent member 15 may have a film shape.

The vent member 15 may be formed to have a predetermined thickness of a preset magnitude. Moreover, the vent member 15 may be inserted into the case 13 so that the insertion length can be varied or the venting pressure and position can be controlled depending on the design. Here, the insertion length of the vent member means a maximum value of the distance between one end and the other end of the vent member 15 based on the protruding direction of the electrode lead.

In an embodiment of the present disclosure, the insertion length of the vent member 15 may be smaller than the width of the sealing portion 13b. For example, the insertion length of the vent member 15 may be less than about 50% of the width of the sealing portion 13b. Here, the width of the sealing portion 13b means a maximum value of the distance between one end and the other end of the sealing portion 13b based on the protruding direction of the electrode lead 11.

In another embodiment of the present disclosure, the insertion length of the vent member 15 may be greater than the width of the sealing portion 13b. For example, the vent member 15 may be inserted through the accommodation portion 13a to be exposed to the outside of the case 13.

In an embodiment of the present disclosure, the vent member 15 may further include an adhesive layer for smoother placement.

In an embodiment of the present disclosure, the secondary battery may be a cylindrical, prismatic, or pouch-type secondary battery. Among them, the secondary battery may be a pouch-type secondary battery.

## Claims

1. A secondary battery (10), comprising:
an electrode assembly (12);
an electrode lead (11) attached to the electrode assembly (12);
a case (13) configured to accommodate the electrode assembly (12) therein;
a lead film (14) formed to surround a part of an outer surface of the electrode lead (11) and interposed between the electrode lead (11) and the case (13); and
a vent member (15),
wherein the case (13) contains a sealant layer (133), and a thermal conductive layer (134) is included in the sealant layer (133), **characterized in that**
the thermal conductive layer (134) includes thermally conductive particles,
wherein the case (13) includes a sealing portion (13b) formed to seal the electrode assembly (12),
the vent member (14) is located in the sealing portion (13b), and
wherein the sealing portion (13b) contains a sealant resin, and
the vent member (15) has a lower melting point than the sealant resin.

2. The secondary battery (10) according to claim 1,
wherein the thermal conductive layer (134) is located in a core of the sealant layer (133).

3. The secondary battery (10) according to claim 1,
wherein the thermally conductive particles include boron nitride, aluminum nitride, or a mixture thereof.

4. The secondary battery (10) according to claim 1,
wherein the thermal conductive layer (134) is in a film shape including thermally conductive particles and a binder.

5. The secondary battery (10) according to claim 1,
wherein the vent member (15) is located in the sealing portion (13b) at a corner where the electrode lead (11) is exposed to the outside.

6. The secondary battery (10) according to claim 1,
wherein the vent member (15) has a maximum sealing strength of less than 58.84 N (6 kgf) /15 mm at 100°C or above, the sealing strength being measured by conducting a tensile test at a speed of 5 mm/min, after cutting the case (13) corresponding to a part in which the vent member (15) is inserted into a width of 15 mm and a length of 5 cm and then gripping both ends thereof using a UTM jig in a state where both ends are spread to 180 degrees.

7. The secondary battery (10) according to claim 1,
wherein the vent member (15) has an average sealing strength of less than 44.13 N (4.5 kgf) / 15 mm at 100°C or above, the sealing strength being measured by conducting a tensile test at a speed of 5 mm/min, after cutting the case (13) corresponding to a part in which the vent member (15) is inserted into a width of 15 mm and a length of 5 cm and then gripping both ends thereof using a UTM jig in a state where both ends are spread to 180 degrees.

8. The secondary battery (10) according to claim 1,
wherein the vent member (15) contains a linear low-density polyethylene having a comonomer with a carbon number of 6 or more.

9. The secondary battery (10) according to claim 8,
wherein the linear low-density polyethylene having a comonomer with a carbon number of 6 or more is polymerized in the presence of a metallocene catalyst.

10. The secondary battery (10) according to claim 8,
wherein in the linear low-density polyethylene having a comonomer with a carbon number of 6 or more, a content of the comonomer with a carbon number of 6 or more is 15 weight% or less, based on 100 weight% of the linear low-density polyethylene having a comonomer with a carbon number of 6 or more, the content of the comonomer is measured using an H-NMR.

11. The secondary battery (10) according to claim 8,
wherein the linear low-density polyethylene having a comonomer with a carbon number of 6 or more has a poly dispersity index, i.e., PDI of 4 or less, the PDI is measured by gel permeation chromatography (GPC) under the following conditions: column: Tosoh, HLC-8321 GPC/HT; solvent: TCB (Trichlorobenzene) + 0.04% BHT (after drying with 0.1% CaCl₂); flow velocity: 1.0 ml/min; sample concentration: 1.5 mg/ml; dose: 300 µl; column temperature: 160°C; detector: RI detector; and standard: Polystyrene (calibrated with a third-order function).

12. The secondary battery (10) according to claim 8,
wherein the case (13) includes a sealing portion (13b) formed to seal the electrode assembly (12),
the sealing portion (13b) contains a sealant resin, and
a difference between a crystallization temperature of the sealant resin and a crystallization temperature of the linear low-density polyethylene having a comonomer with a carbon number of 6 or more is 10°C or less, the crystallization temperatures are measured using a differential scanning calorimeter (DSC).

## Patentansprüche

1. Sekundärbatterie (10), umfassend:
eine Elektrodenanordnung (12);
einen an der Elektrodenanordnung (12) angebrachten Elektrodenableiter (11);
ein Gehäuse (13), das dazu konfiguriert ist, die Elektrodenanordnung (12) darin aufzunehmen;
eine Ableiterfolie (14), die so ausgebildet ist, dass sie einen Teil einer Außenfläche des Elektrodenableiters (11) umgibt und zwischen dem Elektrodenableiter (11) und dem Gehäuse (13) angeordnet ist; und
ein Entlüftungselement (15),
wobei das Gehäuse (13) eine Siegelschicht (133) enthält und eine wärmeleitende Schicht (134) in der Siegelschicht (133) enthalten ist, **dadurch gekennzeichnet, dass** die wärmeleitende Schicht (134) wärmeleitende Partikel enthält,
wobei das Gehäuse (13) einen Siegelabschnitt (13b) aufweist, der zum Versiegeln der Elektrodenanordnung (12) ausgebildet ist,
das Entlüftungselement (15) in dem Siegelabschnitt (13b) angeordnet ist, und
wobei der Siegelabschnitt (13b) ein Siegelharz enthält, und
das Entlüftungselement (15) einen niedrigeren Schmelzpunkt als das Siegelharz aufweist.

2. Sekundärbatterie (10) nach Anspruch 1,
wobei die wärmeleitende Schicht (134) in einem Kern der Siegelschicht (133) angeordnet ist.

3. Sekundärbatterie (10) nach Anspruch 1,
wobei die wärmeleitenden Partikel Bornitrid, Aluminiumnitrid oder eine Mischung davon enthalten.

4. Sekundärbatterie (10) nach Anspruch 1,
wobei die wärmeleitende Schicht (134) in einer Filmform vorliegt, die wärmeleitende Partikel und ein Bindemittel enthält.

5. Sekundärbatterie (10) nach Anspruch 1,
wobei das Entlüftungselement (15) in dem Siegelabschnitt (13b) an einer Ecke angeordnet ist, wo der Elektrodenableiter (11) nach außen freigelegt ist.

6. Sekundärbatterie (10) nach Anspruch 1,
wobei das Entlüftungselement (15) eine maximale Siegelfestigkeit von weniger als 58,84 N (6 kgf) / 15 mm bei 100 °C oder darüber aufweist, wobei die Siegelfestigkeit gemessen wird, indem ein Zugversuch mit einer Geschwindigkeit von 5 mm/min durchgeführt wird, nachdem das Gehäuse (13) entsprechend einem Teil, in dem das Entlüftungselement (15) eingesetzt ist, auf eine Breite von 15 mm und eine Länge von 5 cm zugeschnitten und dann dessen beide Enden unter Verwendung einer UTM-Spannvorrichtung in einem Zustand, in dem beide Enden um 180 Grad gespreizt sind, gegriffen werden.

7. Sekundärbatterie (10) nach Anspruch 1,
wobei das Entlüftungselement (15) eine durchschnittliche Siegelfestigkeit von weniger als 44,13 N (4,5 kgf) / 15 mm bei 100 °C oder darüber aufweist, wobei die Siegelfestigkeit gemessen wird, indem ein Zugversuch mit einer Geschwindigkeit von 5 mm/min durchgeführt wird, nachdem das Gehäuse (13) entsprechend einem Teil, in dem das Entlüftungselement (15) eingesetzt ist, auf eine Breite von 15 mm und eine Länge von 5 cm zugeschnitten und dann dessen beide Enden unter Verwendung einer UTM-Spannvorrichtung in einem Zustand, in dem beide Enden um 180 Grad gespreizt sind, gegriffen werden.

8. Sekundärbatterie (10) nach Anspruch 1,
wobei das Entlüftungselement (15) ein lineares Polyethylen niederer Dichte enthält, das ein Comonomer mit einer Kohlenstoffzahl von 6 oder mehr aufweist.

9. Sekundärbatterie (10) nach Anspruch 8,
wobei das lineare Polyethylen niederer Dichte, das ein Comonomer mit einer Kohlenstoffzahl von 6 oder mehr aufweist, in Gegenwart eines Metallocen-Katalysators polymerisiert wird.

10. Sekundärbatterie (10) nach Anspruch 8,
wobei in dem linearen Polyethylen niederer Dichte, das ein Comonomer mit einer Kohlenstoffzahl von 6 oder mehr aufweist, ein Gehalt des Comonomers mit einer Kohlenstoffzahl von 6 oder mehr 15 Gew.-% oder weniger beträgt, bezogen auf 100 Gew.-% des linearen Polyethylens niederer Dichte, das ein Comonomer mit einer Kohlenstoffzahl von 6 oder mehr aufweist, wobei der Gehalt des Comonomers unter Verwendung einer H-NMR gemessen wird.

11. Sekundärbatterie (10) nach Anspruch 8,
wobei das lineare Polyethylen niederer Dichte, das ein Comonomer mit einer Kohlenstoffzahl von 6 oder mehr aufweist, einen Polydispersitätsindex, d. h. PDI, von 4 oder weniger aufweist, wobei der PDI durch Gelpermeationschromatographie (GPC) unter den folgenden Bedingungen gemessen wird: Säule: Tosoh, HLC-8321 GPC/HT; Lösungsmittel: TCB (Trichlorbenzol) + 0,04 % BHT (nach Trocknung mit 0,1 % CaCl₂); Fließgeschwindigkeit: 1,0 ml/min; Probenkonzentration: 1,5 mg/ml; Dosis: 300 µl; Säulentemperatur: 160 °C; Detektor: RI-Detektor; und Standard: Polystyrol (kalibriert mit einer Funktion dritter Ordnung).

12. Sekundärbatterie (10) nach Anspruch 8,
wobei das Gehäuse (13) einen Siegelabschnitt (13b) aufweist, der zum Versiegeln der Elektrodenanordnung (12) ausgebildet ist,
der Siegelabschnitt (13b) ein Siegelharz enthält, und
eine Differenz zwischen einer Kristallisationstemperatur des Siegelharzes und einer Kristallisationstemperatur des linearen Polyethylens niederer Dichte, das ein Comonomer mit einer Kohlenstoffzahl von 6 oder mehr aufweist, 10 °C oder weniger beträgt, wobei die Kristallisationstemperaturen unter Verwendung eines Differential-Scanning-Kalorimeters (DSC) gemessen werden.

## Revendications

1. Batterie secondaire (10), comprenant :
un ensemble d'électrodes (12) ;
un fil d'électrode (11) fixé à l'ensemble d'électrodes (12) ;
un boîtier (13) configuré pour y loger l'ensemble d'électrodes (12) ;
un film de fil (14) formé pour entourer une partie d'une surface extérieure du fil d'électrode (11) et interposé entre le fil d'électrode (11) et le boîtier (13) ; et
un élément d'évent (15),
dans laquelle le boîtier (13) contient une couche de scellant (133), et une couche conductrice thermique (134) est incluse dans la couche de scellant (133), **caractérisée en ce que**
la couche conductrice thermique (134) inclut des particules conductrices thermiques, dans laquelle le boîtier (13) inclut une partie de scellement (13b) formée pour sceller l'ensemble d'électrodes (12),
l'élément d'évent (15) est situé dans la partie de scellement (13b), et
dans laquelle la partie de scellement (13b) contient une résine de scellant, et
l'élément d'évent (15) a un point de fusion inférieur à celui de la résine de scellant.

2. La batterie secondaire (10) selon la revendication 1,
dans laquelle la couche conductrice thermique (134) est située dans un noyau de la couche de scellant (133).

3. La batterie secondaire (10) selon la revendication 1,
dans laquelle les particules conductrices thermiques incluent du nitrure de bore, du nitrure d'aluminium, ou un mélange de ceux-ci.

4. La batterie secondaire (10) selon la revendication 1,
dans laquelle la couche conductrice thermique (134) est sous une forme de film incluant des particules conductrices thermiques et un liant.

5. La batterie secondaire (10) selon la revendication 1,
dans laquelle l'élément d'évent (15) est situé dans la partie de scellement (13b) à un coin où la sortie d'électrode (11) est exposée à l'extérieur.

6. La batterie secondaire (10) selon la revendication 1,
dans laquelle l'élément d'évent (15) a une résistance maximale au scellement inférieure à 58,84 N (6 kgf) / 15 mm à 100 °C ou plus, la résistance au scellement étant mesurée en effectuant un essai de traction à une vitesse de 5 mm/min, après avoir découpé le boîtier (13) correspondant à une partie dans laquelle l'élément d'évent (15) est inséré sur une largeur de 15 mm et une longueur de 5 cm, puis en saisissant ses deux extrémités à l'aide d'un montage UTM dans un état où les deux extrémités sont écartées à 180 degrés.

7. La batterie secondaire (10) selon la revendication 1,
dans laquelle l'élément d'évent (15) a une résistance moyenne au scellement inférieure à 44,13 N (4,5 kgf) / 15 mm à 100 °C ou plus, la résistance au scellement étant mesurée en effectuant un essai de traction à une vitesse de 5 mm/min, après avoir découpé le boîtier (13) correspondant à une partie dans laquelle l'élément d'évent (15) est inséré sur une largeur de 15 mm et une longueur de 5 cm, puis en saisissant ses deux extrémités à l'aide d'un montage UTM dans un état où les deux extrémités sont écartées à 180 degrés.

8. La batterie secondaire (10) selon la revendication 1,
dans laquelle l'élément d'évent (15) contient un polyéthylène linéaire basse densité ayant un co-monomère avec un nombre d'atomes de carbone de 6 ou plus.

9. La batterie secondaire (10) selon la revendication 8,
dans laquelle le polyéthylène linéaire basse densité ayant un co-monomère avec un nombre d'atomes de carbone de 6 ou plus est polymérisé en présence d'un catalyseur métallocène.

10. La batterie secondaire (10) selon la revendication 8,
dans laquelle, dans le polyéthylène linéaire basse densité ayant un co-monomère avec un nombre d'atomes de carbone de 6 ou plus, une teneur du co-monomère avec un nombre d'atomes de carbone de 6 ou plus est de 15 % en poids ou moins, sur la base de 100 % en poids du polyéthylène linéaire basse densité ayant un co-monomère avec un nombre d'atomes de carbone de 6 ou plus, la teneur du co-monomère étant mesurée à l'aide d'une RMN hydrogène.

11. La batterie secondaire (10) selon la revendication 8,
dans laquelle le polyéthylène linéaire basse densité ayant un co-monomère avec un nombre d'atomes de carbone de 6 ou plus a un indice de polydispersité, c'est-à-dire un IPD, de 4 ou moins, l'IPD étant mesuré par chromatographie par perméation de gel (CPG) dans les conditions suivantes : colonne : Tosoh, HLC-8321 GPC/HT ; solvant : TCB (trichlorobenzène) + 0,04 % de BHT (après séchage avec 0,1 % de CaCl₂) ; débit : 1,0 ml/min ; concentration de l'échantillon : 1,5 mg/ml ; dose : 300 µl ; température de la colonne : 160 °C ; détecteur : détecteur RI ; et standard : polystyrène (calibré avec une fonction du troisième ordre).

12. La batterie secondaire (10) selon la revendication 8,
dans laquelle le boîtier (13) inclut une partie de scellement (13b) formée pour sceller l'ensemble d'électrodes (12),
la partie de scellement (13b) contient une résine de scellant, et
une différence entre une température de cristallisation de la résine de scellant et une température de cristallisation du polyéthylène linéaire basse densité ayant un co-monomère avec un nombre d'atomes de carbone de 6 ou plus est de 10 °C ou moins, les températures de cristallisation étant mesurées à l'aide d'un calorimètre différentiel à balayage (DSC).
